# EUROPEAN PATENT APPLICATION

(11) **EP 4 667 158 A1**
(43) Date of publication of application: **24.12.2025**
(21) Application number: 25182938.8
(22) Date of filing: 16.06.2025
(51) Int. Cl.: B25B 11/00

(54) **ELECTRIC SUCTION CUP, CLEANING CONTROL METHOD FOR AIR PIPELINE OF THE ELECTRIC SUCTION CUP AND SYSTEM**

(30) Priority: 20.06.2024 CN 202410803092
(71) Applicant: Lark (Quzhou) Tech Co Ltd, Quzhou City Zhejiang Province (CN)
(72) Inventor: FENG, YUNHE, Quzhou City (CN)
(74) Representative: Valet Patent Services Limited

(57) **Abstract**

An electric suction cup is provided, which includes a housing, an air inlet component, a vacuum pump component, an air exhaust component, a gas diversion device, an air inlet pipe, a sealing cover, and an air outlet pipe. An open end of the gas diversion device is detachably connected to the sealing cover to form a hollow inner cavity, which can better replace or clean the gas diversion device directly. A cleaning control method for an air pipeline of the electric suction cup is further provided. The method is intelligently controlled and automatically maintained, which can improve the operating efficiency and reliability of the equipment and extend its service life.

## Description

### CROSS-REFERENCE TO RELATED APPLICATIONS

This application claims priority to Chinese Patent Application No. 202410803092.0, filed on June 20, 2024, which is hereby incorporated by reference in its entirety.

### TECHNICAL FIELD

The present disclosure relates to the field of electric tool technologies, and in particular, to an electric suction cup, a cleaning control method for an air pipeline of the electric suction cup and a system.

### BACKGROUND

Electric vacuum suction cup is a device driven by electricity that uses negative pressure to absorb and fix an object. It usually consists of several parts such as an electric motor, a pump or a fan, a suction cup, and a control system. The electric suction cup is widely used in various fields, such as automotive manufacturing, electronic product assembly, glass processing, etc. The electric suction cup is used to transport and fix various materials, such as metal plates, plastic plates, glass plates, etc. In logistics centers and warehouses, the electric suction cup is used for handling and stacking various goods, thereby improving handling efficiency and safety.

CN115367469A discloses an electric suction cup and a control method for the electric suction cup. The electric suction cup includes a rubber disk for adsorbing on an adsorption object, and its adsorption surface can form a closed space with an adsorbed object; a handle, set on the rubber disk; a negative pressure forming component, used to automatically create a negative pressure environment between the rubber disk and the adsorbed object, so that the rubber disk can adsorb onto the adsorbed object; a negative pressure release component, used to release the negative pressure environment formed between the rubber disk and the adsorbed object; a power supply module, used to supply energy to the negative pressure forming component and/or the negative pressure release component, and a controller, used to control the start and stop of a negative pressure vacuum pump and to control a working state of the negative pressure forming component and/or the negative pressure release component.

CN221144998U discloses an electric suction cup for manual exhaust, which includes a suction cup body, a vacuum pump, and a handle. The handle is fixedly connected to one side of the suction cup body, and the other side of the suction cup body is provided with an adsorption surface. The vacuum pump is located in the handle, an adsorption surface of the suction cup body is provided with a suction port. There is a suction channel between the vacuum pump and the suction port, and a pressure relief port is provided on the suction channel. The vacuum pump further includes a power supply component for providing power to the vacuum pump; a switch component used to connect the power supply component and the vacuum pump, used to control the opening and closing of the vacuum pump. The handle is equipped with a vent button to switch between an air release state and a block state. When the vent button is in the block state, a vent valve on the vent button cooperates with the pressure relief port and forms a sealing. When a release button is in the air release state, a release valve on the release button is separated from the pressure relief port.

US11413727B2 discloses a vacuum gripper for gripping a surface of an object, which is a portable vacuum gripper or a handheld vacuum gripper. Before coming into contact with the surface of the object, the vacuum gripper includes a rigid element having a first side and a second side opposite the first side, the second side having a central region and a periphery surrounding the central region; a circular vacuum sealing element including a connection surface that is at least indirectly mounted on the periphery of the second side of the rigid element; a protruding portion that does not come into contact with the rigid element, and the protruding portion is protruded from the rigid element along the entire extension direction of the connection surface in a direction away from the first side of the rigid element; a portion that constitutes the protruding portion and is constructed as a contact surface in at least partial contact with the surface of the object, the vacuum sealing element is elastically deformable at least at the contact surface to ensure that the contact surface is consistent with the surface of the object when pressed against it; and an inner circumferential surface facing the central region and an outer circumferential surface facing away from the inner circumferential surface, two surfaces extending between the contact surface and the connection surface; a chamber defined by the protruding portion, with the central region located on the second side of the rigid element; and an exhaust device installed on the first side of the rigid element for fluid communication with the chamber through the rigid element and configured to continuously extract air from the chamber so that the contact surface is pushed towards the surface of the object, thereby clamping the surface of the object when pressed against it; the periphery of the second side of the rigid base element is defined by a peripheral edge and includes a peripheral support region, where the connection surface of the circular vacuum sealing element is connected to the periphery of the second side of the rigid element.

In the existing technology, electric suction cups work in environments with dust, and the dust gradually accumulates in a suction pipe. The accumulation of dust becomes difficult to clean, causing wear to precision components in the suction cup, and even leading to blockage of the suction pipe, thereby affecting a normal operation of the suction cup, shortening the service life of the equipment, and causing serious faults such as air leakage in the suction cup.

### SUMMARY

After long-term practice, it has been found that electric suction cups are usually used in dusty working environments. Over time, inhaled dust will gradually accumulate in a suction pipeline. Due to the fact that the air pipeline is located in a handle housing, it is difficult to clean the suction pipeline regularly. Sediments not only hinder a normal flow of air, leading to weakened suction, but also cause wear on precision components such as precision valves and sealing rings inside the suction cup. Further wear will reduce the sealing performance of components, ultimately leading to air leakage in the suction cup, rendering it unable to function properly and greatly shortening the overall service life of the electric suction cup.

The present disclosure provides an electric suction cup, which includes a handle and a suction cup, the handle is fixedly connected to the suction cup; where the handle includes a housing, an air inlet component, a vacuum pump component, and an air exhaust component; the air inlet component, the vacuum pump component, and the air exhaust component are respectively connected to an inner wall of the housing; the air inlet component is connected to the vacuum pump component through a pipeline; one end of the air exhaust component is connected to the vacuum pump component through a pipeline, and the other end of the air exhaust component is connected to external air;
the air inlet component includes a gas diversion device, an air inlet pipe, a sealing cover, and an air outlet pipe; an open end of the gas diversion device is detachably connected to the sealing cover to form a hollow inner cavity; one end of the air inlet pipe is connected to the suction cup, and the other end of the air inlet pipe is communicated to the hollow inner cavity; one end of the air outlet pipe is communicated to the hollow inner cavity, and the other end of the air outlet pipe is connected to the vacuum pump component.

In an embodiment, a filter element is provided in the hollow inner cavity of the gas diversion device.

In an embodiment, one end of the air exhaust component that is in communication with the external air is detachably connected to the housing.

In an embodiment, the housing is provided with at least one detachable cover plate.

In an embodiment, the gas diversion device further includes an air pressure detection tube and a pressure relief tube that are in communication with the hollow inner cavity; the air pressure detection tube is connected to an air pressure detection module through a pipeline; the pressure relief pipe is connected to a pressure relief solenoid valve though a pipeline.

In an embodiment, a pressure maintaining device is provided on a connection pipeline between the air inlet component and the vacuum pump component, and/or the pressure maintaining device is provided on a connection pipeline between the air exhaust component and the vacuum pump component; and the pressure maintaining device includes a one-way valve or an electromagnetic valve.

In an embodiment, the handle further includes a control module fixedly connected to the inner wall of the housing, and the control module is electrically connected to the vacuum pump component.

The present disclosure further provides a cleaning control method for an air pipeline of the electric suction cup, and the cleaning control method includes:
step S1, obtaining pressure drop data through an air pressure detection module, comparing the pressure drop data with a preset value, and when the pressure drop data is greater than or equal to the preset value, sending a first control signal to the vacuum pump component, by a control module;
step S2, stopping running after receiving the first control signal, by the vacuum pump component, and sending a first feedback signal to the control module, by the vacuum pump component;
step S3, after removing a filter element, sending a second control signal to the vacuum pump component, by the control module;
step S4, after receiving the second control signal, by the vacuum pump component, immersing the air inlet pipe in cleaning solution, starting running for Δ t1 time, removing the air inlet pipe, running in air for Δ t2 time, and stopping running; sending a second feedback signal to the control module, by the vacuum pump component.

The present disclosure further provides a system for the cleaning control method for an air pipeline of the electric suction cup, including:
a data acquisition unit, configured to obtain pressure drop data through an air pressure detection module, compare the pressure drop data with a preset value, and when the pressure drop data is greater than or equal to the preset value, send a first control signal to the vacuum pump component, by the control module;
a first execution unit, configured to stop running after receiving the first control signal, by the vacuum pump component, and send a first feedback signal to the control module, by the vacuum pump component;
a trigger unit, configured to send a second control signal to the vacuum pump component, by the control module after removing a filter element;
a second execution unit, configured to immerse the air inlet pipe in cleaning solution after receiving the second control signal, by the vacuum pump component, start running for Δ t1 time, remove the air inlet pipe, run in air for Δ t2 time, and stop running; and send a second feedback signal to the control module, by the vacuum pump component.

The present disclosure further provides an electronic device, which includes at least one processor and a memory connected in communication with the at least one processor; where the memory stores an instruction that is executed by at least one processor, and the instruction is executed by the at least one processor to enable the at least one processor to execute the cleaning control method for an air pipeline of the electric suction cup.

The present disclosure further provides a machine-readable storage medium, which stores instruction for causing the machine to execute the cleaning control method for an air pipeline of the electric suction cup.

Compared to existing technology, the present disclosure provides an electric suction cup, which includes a handle and a suction cup. The handle is fixedly connected to the suction cup, and the handle includes a housing, an air inlet component, a vacuum pump component, and an air exhaust component. The air inlet component includes a gas diversion device, an air inlet pipe, a sealing cover, and an air outlet pipe. The open end of the gas diversion device is detachably connected to the sealing cover to form a hollow inner cavity. One end of the air inlet pipe is connected to the suction cup, and the other end thereof is in communication with the hollow inner cavity. One end of the air outlet pipe is communicated to the hollow inner cavity, and the other end thereof is connected to the vacuum pump component. The handle integrates the air inlet component, the vacuum pump component, and the air exhaust component in a more compact design. Through the gas diversion device, inhaled air is effectively distributed to the vacuum pump component, thereby ensuring that the suction cup can quickly form a required vacuum state. A detachable connection between the sealing cover and the gas diversion device enables better direct replacement or cleaning of the gas diversion device, rendering the entire air inlet component to disassemble and maintain, facilitating cleaning and component replacement, and extending the service life of the equipment.

The present disclosure further discloses a cleaning control method for an air pipeline of the electric suction cup. Without disassembling the entire electric suction cup, the pressure drop inside the suction cup is monitored in real time through an air pressure detection module, and monitored pressure drop data is compared with a preset value. When the pressure drop data reaches or exceeds the preset value, it indicates that there is blockage inside the suction cup, or the filter element needs to be replaced. At this time, the control module will automatically send the first control signal to the vacuum pump component to stop running, thereby preventing equipment damage or performance degradation caused by blockage. After receiving the first control signal, the vacuum pump component will stop running and send a first feedback signal to the control module to confirm that it has performed the stop operation, which improves the reliability of the system. After removing the filter element, the air inlet pipe is immersed in the cleaning solution and started. The vacuum pump component runs for Δ t1 time to clean residue in the pipeline. Then the air inlet pipe is removed and run for Δ t2 time in the air to dry the pipeline, further cleaning the air pipeline inside the electric suction cup. The present disclosure further provides a system for intelligent control and automatic maintenance, which can improve the operational efficiency and reliability of equipment, greatly reduce the frequency and cost of manual maintenance, improve the operational reliability of equipment, and extend the service life of equipment.

### BRIEF DESCRIPTION OF DRAWINGS

FIG. 1 is a schematic structural diagram of an electric suction cup according to an embodiment of the present disclosure.
FIG. 2 is a partial sectional schematic diagram of the electric suction cup according to an embodiment of the present disclosure.
FIG. 3 is an enlarged partial sectional view of the electric suction cup according to an embodiment of the present disclosure.
FIG. 4 shows a separation diagram of a cover plate at an end of the electric suction cup handle according to an embodiment of the present disclosure.
FIG. 5 is a schematic diagram of a connection of a control module in the electric suction cup according to an embodiment of the present disclosure.

Numeral reference: 1- handle; 2- suction cup; 11- housing; 12- air inlet component; 13-vacuum pump component; 14- air exhaust component; 121- gas diversion device; 122- air inlet pipe; 123- sealing cover; 124- air outlet pipe; 125- filter element; 126- air pressure detection tube; 127- pressure relief tube; 111- first cover plate; 112- second cover plate.

### DESCRIPTION OF EMBODIMENTS

Specific embodiments of the present disclosure will be described in detail below in combination with the accompanying drawings.

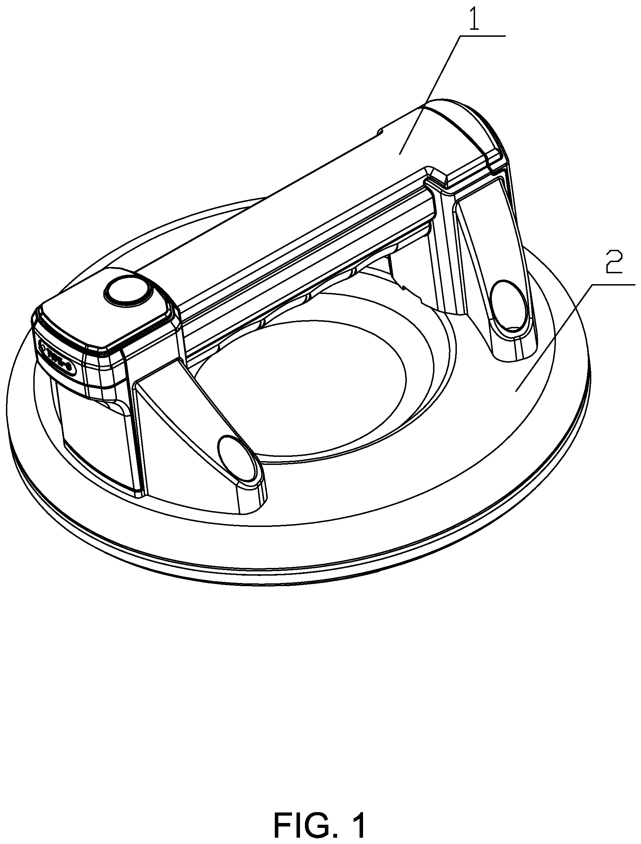

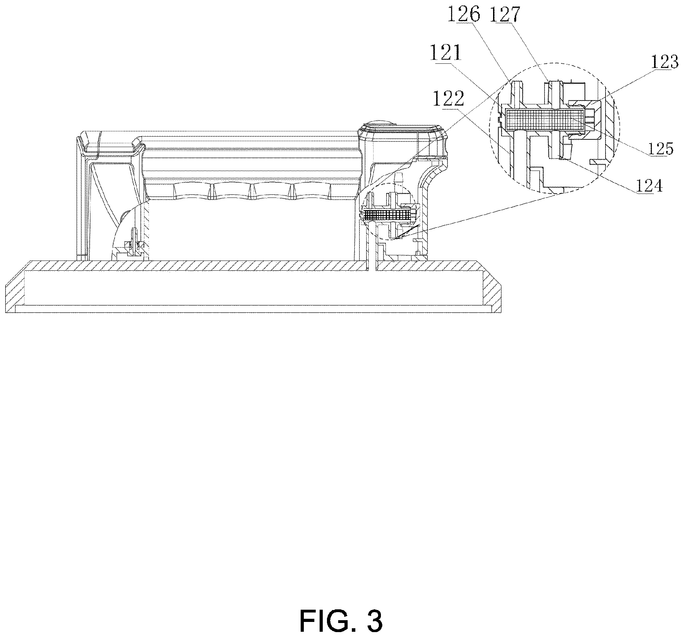

In the existing technology, electric suction cups are usually used in dusty working environments. Over time, inhaled dust will gradually accumulate in a suction pipeline. Due to the fact that the air pipeline is located in a handle housing, it is difficult to clean the suction pipeline regularly. Sediments not only hinder a normal flow of air, leading to weakened suction, but also cause wear on precision components such as precision valves and sealing rings inside the suction cup. Further wear will reduce the sealing performance of components, ultimately leading to air leakage in the suction cup, rendering it unable to function properly and greatly shortening the overall service life of the electric suction cup. As shown in FIGs. 1-3, the present disclosure provides an electric suction cup, which includes a handle 1 and a suction cup 2. The handle 1 is fixedly connected to the suction cup 2, and the handle 1 includes a housing 11, an air inlet component 12, a vacuum pump component 13, and an air exhaust component 14. The air inlet component 12, the vacuum pump component 13, and the air exhaust component 14 are respectively connected to an inner wall of the housing 11. The air inlet component 12 is connected to the vacuum pump component 13 through a pipeline, and one end of the air exhaust component 14 is connected to the vacuum pump component 13 through a pipeline, and the other end of the air exhaust component 14 is connected to external air.

The air inlet component 12 includes a gas diversion device 121, an air inlet pipe 122, a sealing cover 123, and an air outlet pipe 124. An open end of the gas diversion device 121 is detachably connected to the sealing cover 123 to form a hollow inner cavity. One end of the air inlet pipe 122 is connected to the suction cup 2, and the other end of the air inlet pipe 122 is connected to the hollow inner cavity. One end of the air outlet pipe 124 is communicated to the hollow inner cavity, and the other end of the air outlet pipe 124 is connected to the vacuum pump component 13.

The present disclosure provides an electric suction cup including the handle 1 and the suction cup 2. The handle 1 is fixedly connected to the suction cup 2. The handle 1 includes the housing 11, the air inlet component 12, the vacuum pump component 13, and the air exhaust component 14. The air inlet component 12 includes the gas diversion device 121, the air inlet pipe 122, the sealing cover 123, and the air outlet pipe 124. The open end of the gas diversion device 121 is detachably connected to the sealing cover 123 to form the hollow inner cavity. One end of the air inlet pipe 122 is connected to the suction cup 2, and the other end of the air inlet pipe 122 is connected to the hollow inner cavity. One end of the air outlet pipe 124 is communicated to the hollow inner cavity, and the other end of the air outlet pipe 124 is connected to the vacuum pump component 13. The handle 1 integrates the air inlet component 12, the vacuum pump component 13, and the air exhaust component 14 with a more compact design, inhaled air is effectively distributed to the vacuum pump component 13 through the gas diversion device 121, ensuring that the suction cup 2 can quickly form a required vacuum state. A removable connection between the sealing cover 123 and the gas diversion device 121 enables better direct replacement or cleaning of the gas diversion device 121, rendering the entire air inlet component 12 and air exhaust component 14 easy to disassemble and maintain, facilitating cleaning and component replacement, and extending the service life of the equipment.

In order to filter the dust in the inhaled air and protect the components in the air pipeline, in an implementation mode, a filter element 125 is provided in the hollow inner cavity of the gas diversion device 121. For example, when the dust content in the inhaled air is too high, it has a strong destructive effect on the one-way valve in the air pipeline and even causes the one-way valve to fail. In an implementation mode, the filter element 125 includes microporous filter paper or non-woven fabric, activated carbon. In order to effectively filter the air with dust in the hollow cavity of the gas diversion device 121, the gas diversion device 121 includes a gas splitter. In assembly, the filter element 125 can be tightly and detachably installed in the hollow cavity, without loosening or moving under a normal working condition, thereby ensuring the stability and sealing of the filter element 125 in the gas diversion device 121, and preventing unfiltered air from bypassing the filter element 125 and entering the system.

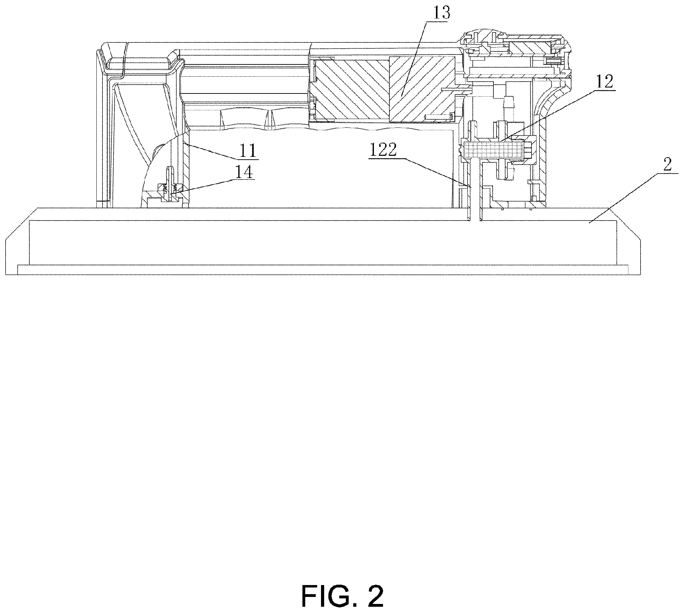

In order to better discharge the inhaled air to an outside of the handle 1, in an implementation mode, the air exhaust component 14 is detachably connected to the housing 11 at one end that is in communication with the external air. In order to facilitate the disassembly, installation, and maintenance of the air exhaust component 14, in an implementation mode, the detachable connection is a threaded connection. The air exhaust component 14 is a tubular device, and threads are machined on an outer wall of the air exhaust component 14. The housing 11 is provided with internal threads that cooperate with it or independent nuts that cooperate with it internally. The air exhaust component 14 is connected to the housing 11 by threads, in an implementation mode, pipe threads with good air tightness are used. In order to better exhaust the gas and ensure that the entire handle 1 does not affect the handheld operation during use, one end of the air exhaust component 14 that is connected to the external air and the housing 11 is provided at one end of the handle 1, as shown in FIG. 2.

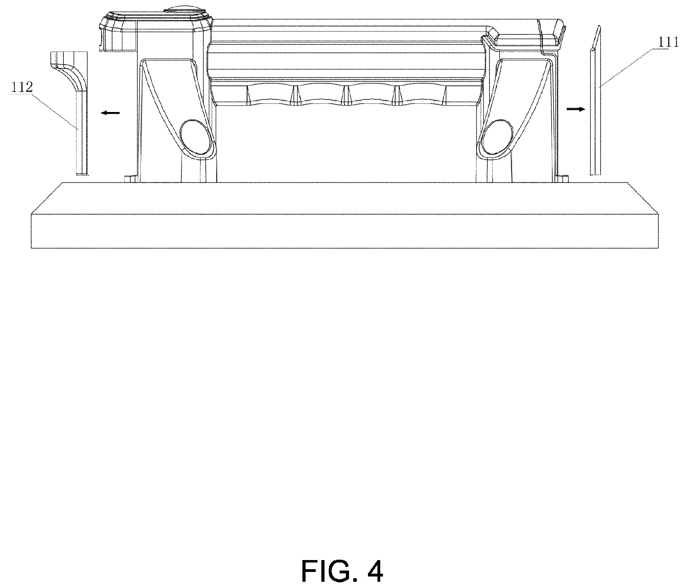

In order to better fix and install internal components of the handle 1, the air inlet component 12 is provided at one end of the handle 1, and the air exhaust component 14 is provided at the other end of the handle 1. In order to better maintain and facilitate the disassembly of internal components, especially those that are prone to dust accumulation, such as the air exhaust component 14 and the air inlet component 12. In an implementation mode, the housing 11 is provided with at least one detachable cover plate. The cover plate includes a first cover plate 111 and a second cover plate 112. In order to better disassemble the housing 11 and replace or clean the air exhaust component 14 and the air inlet component 12, detachable cover plates are provided on outer sides of two ends. As shown in FIG. 4, the first cover plate 111 is located at one end of the handle 1 with an air inlet component, and the second cover plate 112 is located at the other end of the handle 1 with an air exhaust component.

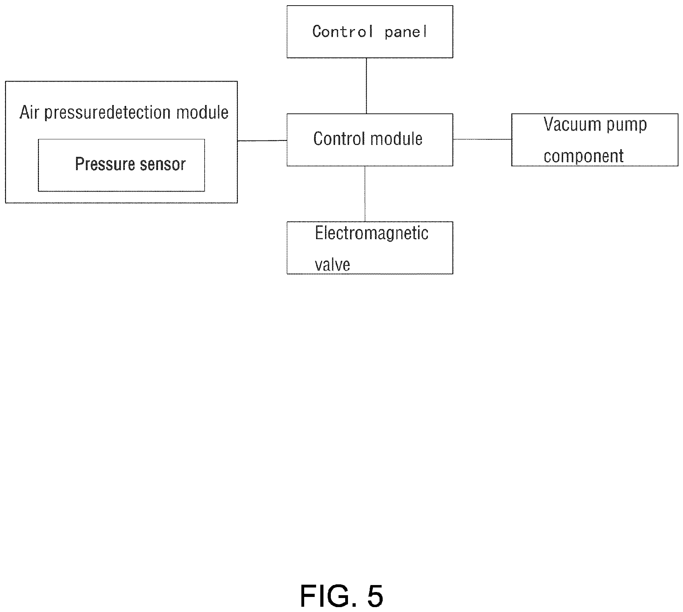

In order to better detect an air pressure value of the air sucked into the hollow cavity and control an operation of the electric suction cup 2, in an implementation mode, the gas diversion device 121 further includes an air pressure detection tube 126 and a pressure relief tube 127 that are in communication with the hollow cavity. The air pressure detection tube 126 is connected to an air pressure detection module through a pipeline. The pressure relief tube 127 is connected to a pressure relief solenoid valve through a pipeline. As shown in FIG. 5, in order to obtain pressure values more accurately for control, in an implementation mode, the air pressure detection module is provided with a pressure sensor, in an implementation mode, it is a piezoresistive sensor, which collects a pressure signal and transmits it the control module of the electric suction cup 2.

In order to reduce a backflow of the inhaled air in the air pipeline of the electric suction cup 2, in an implementation mode, a pressure maintaining device is provided on a connection pipeline between the air inlet component 12 and the vacuum pump component 13, and/or the pressure maintaining device is provided on a connection pipeline between the air exhaust component 14 and the vacuum pump component 13, and the pressure maintaining device includes a one-way valve or an electromagnetic valve. In order to control the opening and closing of the air pipeline more accurately, in an implementation mode, a solenoid valve is used.

In order to better control the start and stop of the vacuum pump component 13, in an implementation mode, the handle 1 further includes a control module fixedly connected to the inner wall of the housing 11, and the control module is electrically connected to the vacuum pump component 13. The solenoid valve is electrically connected to the control module. In order to better fix the control module in the handle 1 of the electric suction cup 2, in an implementation mode, the control module, the vacuum pump component 13, and the pressure maintaining device are all fixedly connected to the inner wall of the housing 11 through a clamping way.

The present disclosure further provides a cleaning control method for an air pipeline of the electric suction cup, and the cleaning control method includes:
step S1, obtaining pressure drop data through an air pressure detection module, comparing the pressure drop data with a preset value, and when the pressure drop data is greater than or equal to the preset value, sending a first control signal to the vacuum pump component 13, by a control module;
step S2, stopping running after receiving the first control signal, by the vacuum pump component 13, and sending a first feedback signal to the control module, by the vacuum pump component 13;
step S3, after removing a filter element 125, sending a second control signal to vacuum pump component 13, by the control module;
step S4, after receiving the second control signal, by the vacuum pump component 13, immersing the air inlet pipe 122 in cleaning solution, starting running for Δ t1 time, removing the intake pipe, running in air for Δ t2 time, and stopping running; sending a second feedback signal to the control module, by the vacuum pump component 13.

The present disclosure further discloses a cleaning control method for an air pipeline of the electric suction cup. Without disassembling the entire electric suction cup, the pressure drop inside the suction cup 2 is monitored in real time through the air pressure detection module, and monitored pressure drop data is compared with a preset value. When the pressure drop data reaches or exceeds the preset value, it indicates that there is blockage inside suction cup 2 or the filter element 125 needs to be replaced. At this time, the control module will automatically send the first control signal to the vacuum pump component 13 to stop running, thereby preventing equipment damage or performance degradation caused by blockage. After receiving the first control signal, the vacuum pump component 13 will stop running and send a first feedback signal to the control module to confirm that it has performed the stop operation, which improves the reliability of the system. After removing the filter element 125, the air inlet pipe 122 is immersed in the cleaning solution and started. The vacuum pump component 13 runs for Δ t1 time to clean residue in the pipeline. Then, the air inlet pipe 122 is removed and run for Δ t2 time in the air to dry the pipeline, further cleaning the air pipeline inside the electric suction cup 2. This method can achieve intelligent control and automatic maintenance, improve the operating efficiency and reliability of equipment, greatly reduce the frequency and cost of manual maintenance, improve the operational reliability of equipment, and extend the service life of equipment.

The second control signal sent by the control module can be generated through manually triggering a signal from a control panel to the control module. For example, after the electric suction cup completes the suction work, it is left to stand for 1-2 minutes, and pressure drop data is obtained through the air pressure detection module. When the preset value is 10kPa, if a negative pressure value is increased from -65kPa to -50kPa and the pressure drop is 15kPa, which is greater than the preset value, the control module sends the first control signal to the vacuum pump component, and the vacuum pump component stops running. In an implementation mode, the preset value is 15%-24% of an initial value, that is, the negative pressure value is -65 kPa, and the preset value is 9.75-15.6 kPa. When the inlet pipe is immersed in the cleaning solution, after starting the operation for Δ t1 time, in order to better clean the air pipeline in the electric suction cup, Δ t1 is set to 5-10 minutes and Δ t2 is set to 3-8 minutes.

The present disclosure further provides a system for the cleaning control method for an air pipeline of the electric suction cup, and the system includes:
a data acquisition unit, configured to obtain pressure drop data through an air pressure detection module, compare the pressure drop data with a preset value, and when the pressure drop data is greater than or equal to the preset value, sends a first control signal to the vacuum pump component 13, by the control module;
a first execution unit, configured to stop running after receiving the first control signal, by the vacuum pump component 13, and send a first feedback signal to the control module, by the vacuum pump component 13;
a trigger unit, configured to send a second control signal to the vacuum pump component 13 by the control module after removing a filter element 125;
a second execution unit, configured to immerse the air inlet pipe in cleaning solution after receiving the second control signal, by the vacuum pump component 13, start running for Δ t1 time, remove the air inlet pipe, run in air for Δ t2 time, and stop running; and send a second feedback signal to the control module, by the vacuum pump component.

The system disclosed in the present disclosure can achieve intelligent control and automatic maintenance, improve operational efficiency and reliability of equipment, greatly reduce the frequency and cost of manual maintenance, improve the operational reliability of equipment, and extend the service life of equipment.

The present disclosure further provides an electronic device, including at least one processor and
a memory connected in communication with at least one processor;
where the memory stores an instruction that can be executed by at least one processor to enable the at least one processor to perform the cleaning control method for an air pipeline of the electric suction cup.

The present disclosure further provides a machine-readable storage medium, which stores instruction for causing the machine to execute the cleaning control method for an air pipeline of the electric suction cup.

The above description is only preferred embodiments of the present disclosure and is not intended to limit the present disclosure. Any modifications, equivalent substitutions, improvements, etc. made within the spirit and principles of the present disclosure should be included in the protection scope of the present disclosure.

## Claims

1. An electric suction cup, comprising a handle and a suction cup, the handle is fixedly connected to the suction cup,
wherein the handle comprises a housing, an air inlet component, a vacuum pump component, and an air exhaust component;
the air inlet component, the vacuum pump component, and the air exhaust component are respectively connected to an inner wall of the housing;
the air inlet component is connected to the vacuum pump component through a pipeline,
one end of the air exhaust component is connected to the vacuum pump component through a pipeline, and the other end of the air exhaust component is connected to external air;
the air inlet component comprises a gas diversion device, an air inlet pipe, a sealing cover, and an air outlet pipe;
an open end of the gas diversion device is detachably connected to the sealing cover to form a hollow inner cavity;
one end of the air inlet pipe is connected to the suction cup, and the other end of the air inlet pipe is communicated to the hollow inner cavity;
one end of the air outlet pipe is communicated to the hollow inner cavity, and the other end of the air outlet pipe is connected to the vacuum pump component.

2. The electric suction cup according to claim 1, wherein a filter element is provided in the hollow inner cavity of the gas diversion device.

3. The electric suction cup according to claim 1, wherein one end of the air exhaust component that is in communication with the external air is detachably connected to the housing.

4. The electric suction cup according to claim 1, wherein the housing is provided with at least one detachable cover plate.

5. The electric suction cup according to claim 1, wherein the gas diversion device further comprises an air pressure detection tube and a pressure relief tube that are in communication with the hollow inner cavity;
the air pressure detection tube is connected to an air pressure detection module through a pipeline; the pressure relief pipe is connected to a pressure relief solenoid valve though a pipeline.

6. The electric suction cup according to claim 1, wherein a pressure maintaining device is provided on a connection pipeline between the air inlet component and the vacuum pump component, and/or
the pressure maintaining device is provided on a connection pipeline between the air exhaust component and the vacuum pump component;
the pressure maintaining device comprises a one-way valve or an electromagnetic valve.

7. The electric suction cup according to claim 6, wherein the handle further comprises a control module fixedly connected to the inner wall of the housing, and the control module is electrically connected to the vacuum pump component.

8. A cleaning control method for an air pipeline of the electric suction cup according to claim 1, and the cleaning control method comprises:
step S1, obtaining pressure drop data through an air pressure detection module, comparing the pressure drop data with a preset value, and when the pressure drop data is greater than or equal to the preset value, sending a first control signal to the vacuum pump component, by a control module;
step S2, stopping running after receiving the first control signal, by the vacuum pump component, and sending a first feedback signal to the control module, by the vacuum pump component;
step S3, after removing a filter element, sending a second control signal to the vacuum pump component, by the control module;
step S4, after receiving the second control signal, by the vacuum pump component, immersing the air inlet pipe in cleaning solution, starting running for Δ t1 time, removing the air inlet pipe, running in air for Δ t2 time, and stopping running; sending a second feedback signal to the control module, by the vacuum pump component.

9. A system for the cleaning control method for an air pipeline of the electric suction cup according to claim 8, comprising:
a data acquisition unit, configured to obtain pressure drop data through an air pressure detection module, compare the pressure drop data with a preset value, and when the pressure drop data is greater than or equal to the preset value, send a first control signal to the vacuum pump component, by the control module;
a first execution unit, configured to stop running after receiving the first control signal, by the vacuum pump component, and send a first feedback signal to the control module, by the vacuum pump component;
a trigger unit, configured to send a second control signal to the vacuum pump component by the control module after removing a filter element;
a second execution unit, configured to immerse the air inlet pipe in cleaning solution after receiving the second control signal, by the vacuum pump component, start running for Δ t1 time, remove the air inlet pipe, run in air for Δ t2 time, and stop running; and send a second feedback signal to the control module, by the vacuum pump component.

10. An electronic device comprising at least one processor and a memory connected in communication with the at least one processor;
wherein the memory stores an instruction that is executed by at least one processor, and the instruction is executed by the at least one processor to enable the at least one processor to execute the cleaning control method for an air pipeline of the electric suction cup according to claim 8.
